# FASCICULE DE BREVET EUROPEEN

(11) **EP 0 422 969 B1**
(45) Date de publication et mention de la délivrance du brevet: **19.01.1994**
(21) Numéro de dépôt: 90402456.9
(22) Date de dépôt: 07.09.1990
(51) Int. Cl.: B60T 11/10, B60T 17/18

(54) **Circuit hydraulique de freinage pour véhicule automobile**
Flüssigkeitsbremskreis für Kraftfahrzeug
Hydraulic brake circuit for motorvehicle

(30) Priorité: 13.10.1989 FR 8913384
(43) Date de publication de la demande: 17.04.1991
(73) Titulaire: ALLIEDSIGNAL EUROPE SERVICES TECHNIQUES, 93700 Drancy (FR)
(72) Inventeur: Kervagoret, Gilbert, Bendix Europe Services Techn., F-93700 Drancy (FR)
(74) Mandataire: Bentz, Jean-Paul

(56) Documents cités:
- EP-A- 0 322 261
- DE-A- 2 059 037
- DE-A- 2 507 997
- US-A- 4 066 303

## Description

La présente invention concerne un circuit hydraulique de freinage pour véhicule automobile, du type comprenant un circuit primaire et un circuit secondaire d'alimentation des moteurs de frein associées aux roues du véhicule, ce circuit pouvant être équipé d'un dispositif d'antiblocage des roues.

On connait de EP-A-0 322 261 un tel circuit équipé de moyens assurant la sécurité du freinage en cas de défaillance de l'un des circuits primaire et secondaire d'alimentation des moteurs de frein ; ces moyens sont constitués par une valve d'isolement comprenant essentiellement un piston mobile dans un alésage entre une première et une deuxième chambre ; dans la première chambre, le piston porte axialement une bille susceptible de venir obturer le siège d'un clapet ; dans la deuxième chambre est placé un ressort qui charge le piston, et donc la bille, vers la position de fermeture du clapet. Ces moyens comprennent également un dispositif pour équilibrer les pressions dans les moteurs de frein associés aux roues arrières ; ce dispositif comprend essentiellement un piston mobile dans un alésage entre deux chambres contenant chacune un ressort respectivement, qui maintient au repos le piston dans une position d'équilibre médiane. En cas de défaillance du circuit primaire, la valve établit une communication entre le moteur de frein associé à l'une des roues arrières du véhicule et le circuit secondaire pour assurer le freinage de l'une de ces roues associée à ce moteur de frein en dépit de la mise hors service du dispositif d'équilibrage dans cette situation.

En fonctionnement normal, la valve isole un moteur de frein associé à une des roues arrières ; cependant, les pressions de fluide régnant dans les première et deuxième chambres sont sensiblement identiques ; de ce fait, c'est la seule pression développée par le ressort qui a pour effet de plaquer la bille sur le siège du clapet pour empêcher toute communication entre le circuit secondaire et le moteur de frein associé à une des roues arrières. Comme les pressions des deux réservoirs du maître-cylindre tandem ne sont pas toujours égales, la position de la bille est instable et le clapet peut laisser passer fugitivement du fluide dans le dispositif d'équilibrage tendant à faire déplacer le piston équilibreur hors de sa position d'équilibre médiane.

Le système qui vient d'être décrit bien que très satisfaisant présente donc l'inconvénient, dans certains cas de fonctionnement, de faire déplacer progressivement le piston d'équilibreur jusqu'à l'une de ses butées, ce qui l'empêche d'assurer sa fonction.

La présente invention a pour but d'obvier à cet inconvénient en proposant des moyens appropriés insérés dans un tel circuit de freinage équipé éventuellement d'un dispositif d'antiblocage de roues.

On atteint ce but de l'invention avec un circuit hydraulique de freinage pour véhicule automobile comprenant un générateur de pression pour fluide de freinage, un circuit primaire et un circuit secondaire respectivement reliés à au moins un moteur de frein, un dispositif d'équilibrage des pressions disposé entre un moteur de frein relié au circuit primaire et un moteur de frein relié au circuit secondaire, et une valve sensible à la pression du fluide dans les circuits primaire et secondaire isolant normalement du générateur de pression le moteur de frein relié au circuit secondaire et le reliant à ce dernier en cas de défaillance du circuit primaire, la valve comprenant un piston mobile dans un alésage entre une première chambre connectée au générateur de qpression par l'intermédiaire du circuit secondaire et une deuxième chambre reliée au circuit primaire, le piston formant clapet établissant ou interrompant une communication entre la première chambre et un moteur de frein relié au circuit secondaire, et un moyen élastique rétablissant la communication au repos du circuit.

Selon l'invention, le piston est étagé et mobile dans un alésage étagé, le diamètre du piston étagé en regard de la deuxième chambre étant supérieur à celui en regard de la première chambre.

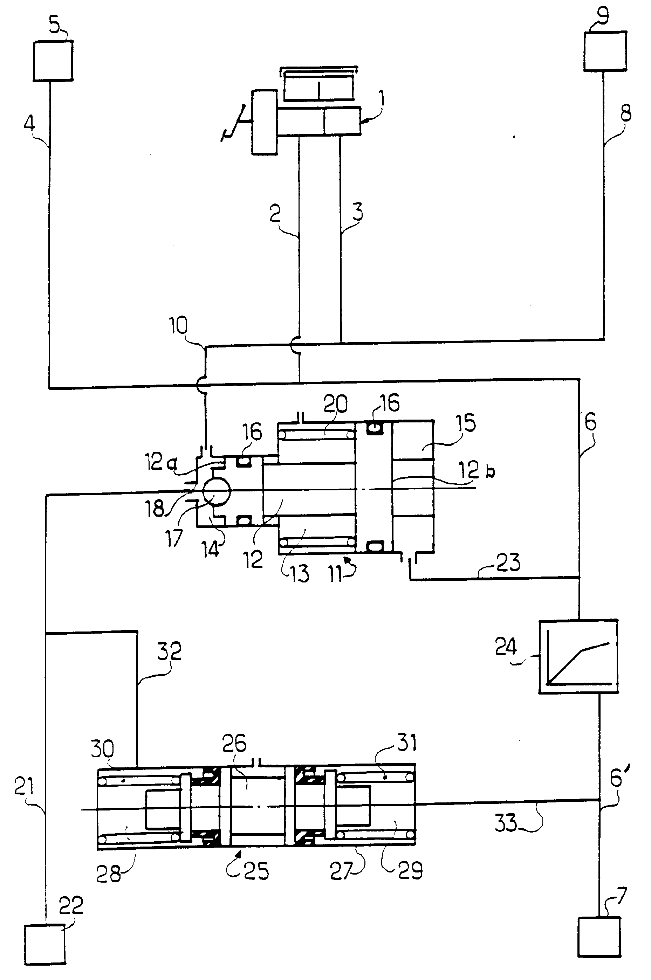

L'invention sera mieux comprise et d'autres buts, avantages et caractéristiques apparaîtront plus clairement à la lecture de la description qui suit d'un mode préféré de réalisation donné à titre non limitatif faite en relation avec le dessin annexé sur lequel :

la Figure unique représente un schéma d'un circuit de freinage selon l'invention.

On se réfère au dessin où il apparait que le circuit de l'exemple représenté en position de repos suivant l'invention comprend un générateur de pression de freinage 1 constitué par exemple d'un servofrein associé à un maître-cylindre tandem classique à deux réservoirs, ce générateur étant commandé par la pédale de frein d'un véhicule automobile équipé du circuit suivant l'invention. Le maître-cylindre tandem du générateur 1 commande la mise en pression de deux circuits distincts d'alimentation de moteurs de frein associés aux roues du véhicule, un circuit primaire 2 et un circuit secondaire 3, respectivement. Le circuit primaire 2 alimente par une ligne 4 un premier moteur de frein 5 associé à une première roue du véhicule et, par une ligne 6 un deuxième moteur de frein associé à une deuxième roue du véhicule. Les première et deuxième roues sont montées sur l'essieu avant et l'essieu arrière du véhicule respectivement. Sur le mode de réalisation du circuit représenté à la Figure, la première roue est la roue avant gauche et la deuxième roue est la roue arrière droite, le circuit primaire adoptant ainsi la configuration diagonale classique. Le circuit secondaire 3 alimente, par l'intermédiaire d'une ligne 8 un troisième moteur de frein 9 associé à une troisième roue du véhicule. Dans le mode de réalisation représenté, cette troisième roue est la roue avant droite. Le circuit secondaire 3 est aussi connecté par une ligne 10 à une valve d'isolement 11 dont on expliquera le fonctionnement dans la suite. Selon l'invention, cette valve d'isolement est essentiellement constituée par un piston étagé 12 mobile dans un alésage étagé entre une première chambre 14 et une deuxième chambre 15, le diamètre de la partie 12a du piston étagé 12 en regard de la première chambre 14 étant inférieur à celui 12b de la partie du piston en regard de la deuxième chambre 15. Dans la première chambre 14, le piston 12 porte axialement une bille 17 formant clapet susceptible de venir obturer le siège 18 par lequel la chambre 14 peut communiquer par une ligne 21 avec le quatrième moteur de frein 22 et par une ligne 32 avec un dispositif d'équilibrage 25, qui sera décrit par la suite. Une ligne 23 fait communiquer la deuxième chambre 15 de la valve 11 avec la ligne 6 d'alimentation du moteur de frein 7. Des coupelles d'étanchéité 16 isolent une chambre annulaire 13 entourant la partie centrale du piston 12 des première et deuxième chambres. Un moyen élastique 20 est susceptible de charger le piston 12 et donc la bille 17, vers la position d'ouverture du clapet. Dans l'exemple représenté, ce moyen élastique 20 est un ressort hélicoïdal disposé dans la chambre annulaire 13 qui est reliée à la pression atmosphérique. Bien évidement, il pourrait également être disposé dans la chambre 14.

Dans le mode de réalisation représenté, le quatrième moteur de frein 22 est associé à la roue gauche de l'essieu arrière du véhicule.

On notera encore sur la ligne 6 la présence éventuelle d'un correcteur de pression classique 24, en aval du raccordement des lignes 6 et 23. Comme le circuit décrit dans le document précité, le circuit suivant l'invention comprend aussi un dispositif 25 pour équilibrer les pressions dans les moteurs de frein 7 et 22 associés aux roues arrières ; le dispositif 25 comprend un piston 26 mobile dans un alésage 27 entre deux chambres 28 et 29 contenant chacune un ressort 30,31 respectivement, qui maintient au repos le piston 26 dans une position d'équilibre médiane. La première chambre 28 est reliée, par la ligne 32 à la ligne 21 reliant le quatrième moteur de frein 22, à la première chambre 14 de la valve 11, tandis que la chambre 29 est reliée, par une ligne 33 à la ligne d'alimentation 6′ du moteur de frein 7, entre le correcteur 24 et ce moteur de frein.

Le circuit de freinage suivant l'invention fonctionne comme suit. Lorsqu'on appuie sur la pédale de frein, la pression établie par le générateur de pression de freinage 1 est transmise aux moteurs de frein 5, 9 et 7 par les lignes 4, 8 et 6 respectivement. La pression établie dans la ligne 6 est alors aussi transmise par la ligne 23 à la deuxième chambre 15 de la valve 11, et à travers le correcteur 24 et par la ligne 33, à la deuxième chambre 29 du dispositif d'équilibrage 25. Simultanément, la pression établie dans la ligne 10 est transmise à la première chambre 14. La pression du fluide s'exerçant sur la face de la partie 12b du piston 12 dans la deuxième chambre 15 produit une force supérieure à celle s'exerçant sur la face de la partie 12a du piston 12 dans la première chambre 14. Ceci se traduit par un déplacement du piston 12 vers la gauche sur la Figure, la bille 17 venant alors sur son siège 18 pour interrompre la communication entre la ligne 10 et la ligne 21. On obtient ainsi un verrouillage optimal du piston en position de fermeture du clapet même s'il existe une petite différence de pression entre les circuits primaire et secondaire.

Le moteur de frein 22 étant en communication par les lignes 21 et 32 avec la chambre 28 du dispositif d'équilibrage 25, la pression dans la ligne 6, éventuellement corrigée par le correcteur 24, est transmise à la chambre 29 et par le piston 26, La pression dans le moteur de frein 22 est ainsi pilotée par celle établie dans la ligne 6′ qui alimente le moteur de frein 7 et on réalise ainsi un équilibre des pressions de freinage dans les moteurs de frein associés aux roues arrières du véhicule ce qui est favorable au maintien de la directibilité de celui-ci, comme cela est bien connu dans la technique.

Le moyen élastique 20 maintient au repos le piston 12 dans une position d'ouverture du clapet ; de ce fait, lorsqu'on relâche la pédale de frein, on établit une communication entre le circuit secondaire 3 et la ligne 32, via la ligne 21 afin de libérer la pression pouvant se trouver dans la chambre 28 du dispositif d'équilibrage 25 et dans le moteur de frein 22.

En cas de défaillance du circuit primaire 2, le générateur de pression de freinage 1 continue d'alimenter le circuit secondaire 3 et, comme le piston 12 est en position d'ouverture du clapet, alimente aussi les moteurs de frein 22 et 9.

S'il y a défaillance du circuit secondaire 3, en amont de la valve 11, la roue arrière gauche continuera à être freinée par le moteur de frein 22, seul le moteur de frein 9 n'étant pas alimenté. S'il y a défaillance du circuit secondaire en aval de la valve 11, dans les lignes 21 ou 32 par exemple, c'est la roue avant droite qui continuera à bénéficier d'un freinage par le moteur de frein 9.

La présente invention s'applique à un circuit de freinage classique aussi bien qu'à un circuit de freinage équipé d'un dispositif d'antiblocage des roues.

L'invention n'est pas limitée à un circuit dans lequel la roue arrière gauche est normalement isolée du circuit secondaire mais s'applique à tout circuit équivalent.

## Revendications

1. Circuit hydraulique de freinage pour véhicule automobile, comprenant un générateur de pression (1) pour fluide de freinage, un circuit primaire et un circuit secondaire respectivement reliés à au moins un moteur de frein, un dispositif d'équilibrage (25) des pressions disposé entre un moteur de frein relié audit circuit primaire et un moteur de frein relié audit circuit secondaire, et une valve (11) sensible à la pression du fluide dans les circuits primaire et secondaire isolant normalement dudit générateur de pression (1) ledit moteur de frein relié audit circuit secondaire et le reliant à ce dernier en cas de défaillance du circuit primaire, caractérisé en ce que ladite valve (11) comprenant un piston étagé (12) mobile dans un alésage entre une première chambre (14) connectée audit générateur de pression (1) par l'intermédiaire dudit circuit secondaire, et une deuxième chambre (15) reliée audit circuit primaire, ledit piston (12) formant clapet (17, 18) établissant ou interrompant une communication entre ladite première chambre (14) et ledit moteur de frein relié audit circuit secondaire, et un moyen élastique (20) établissant ladite communication au repos du circuit, caractérisé en ce que le piston (12) est étagé et mobile dans un alésage étagé, le diamètre de la partie (12b) dudit piston étagé en regard de la deuxième chambre (15) étant supérieur à celui de la partie (12a) dudit piston en regard de ladite première chambre (14).

2. Circuit selon la revendication 1, caractérisé en ce qu'entre les extrémités dudit piston étagé (12) est formée une chambre annulaire (13) reliée à la pression atmosphérique.

3. Circuit selon la revendication 2, caractérisé en ce que ledit moyen élastique (20) est disposé dans ladite chambre annulaire.

4. Circuit selon la revendication 1 ou 2, caractérisé en ce que ledit moyen élastique (20) est disposé dans ladite première chambre (14).

## Claims

1. Hydraulic brake circuit for a motor vehicle, comprising a pressure generator (1) for brake fluid, a primary circuit and a secondary circuit connected respectively to at least one brake motor, a pressure-balancing device (25) arranged between a brake motor connected to the said primary circuit and a brake motor connected to the said secondary circuit, and a valve (11) which is sensitive to the pressure of the fluid in the primary and secondary circuits and which normally isolates the said brake motor connected to the said secondary circuit from the said pressure generator (1) and connects it to the latter in the event of the failure of the primary circuit, the said valve (11) comprising a piston (12) movable in a bore between a first chamber (14) connected to the said pressure generator (1) by means of the said secondary circuit and a second chamber (15) connected to the said primary circuit, the said shutter-forming piston (12), (17, 18) making or breaking communication between the said first chamber (14) and the said brake motor connected to the said secondary circuit, and an elastic means (20) making the said communication when the circuit is at rest, characterised in that the piston (12) is stepped and movable in a stepped bore, the diameter of the part (126) of the said stepped piston confronting the second chamber (15) being larger than that of the part (12a) of the said piston confronting the said first chamber (14).

2. Circuit according to Claim 1, characterized in that an annular chamber (13) connected to the atmospheric pressure is formed between the ends of the said stepped piston (12).

3. Circuit according to Claim 2, characterized in that the said elastic means (20) is arranged in the said annular chamber.

4. Circuit according to Claim 1 or 2, characterized in that the said elastic means (20) is arranged in the said first chamber (14).

## Patentansprüche

1. Flüssigkeitsbremskreis für ein Kraftfahrzeug mit einem Druckgenerator (1) für Bremsflüssigkeit, einem Primär- und einem Sekundärkreis, die jeweils mit wenigstens einem Bremsmotor verbunden sind, einer Einrichtung (25) zum Ausgleichen der Drücke, die zwischen einem mit dem Primärkreis verbundenen Bremsmotor und einem mit dem Sekundärkreis verbundenen Bremsmotor angeordnet ist, sowie einem Ventil (11), das gegen den Druck der Flüssigkeit in dem Primär- und dem Sekundärkreis empfindlich ist und normalerweise den mit dem Sekundärkreis verbundenen Bremsmotor von dem Druckgenerator (1) isoliert und ihn bei einem Ausfall des Primärkreises mit dem Sekundärkreis verbindet, wobei das Ventil (11) einen Kolben (12) aufweist, der in einer Bohrung zwischen einer ersten, über den Sekundärkreis mit dem Druckgenerator (1) verbundenen Kammer (14) und einer zweiten, mit dem Primärkreis verbundenen Kammer (15) beweglich ist, wobei der Kolben (12) eine Ventilklappe (17, 18) bildet, die zwischen der ersten Kammer (14) und dem mit dem Sekundärkreis verbundenen Bremsmotor eine Verbindung herstellt oder unterbricht, und ein elastisches Mittel (20) die Verbindung in der Ruhestellung des Kreises herstellt, dadurch gekennzeichnet, daß der Kolben (12) abgestuft und in einer abgestuften Bohrung beweglich ist, wobei der Durchmesser des zur zweiten Kammer (15) gerichteten Teils (12b) des abgestuften Kolbens größer als der des zur ersten Kammer (14) gerichteten Teils (12a) des Kolbens ist.

2. Kreis nach Anspruch 1, dadurch gekennzeichnet, daß zwischen den Enden des abgestuften Kolbens (12) eine mit dem Atmosphärendruck verbundene, ringförmige Kammer (13) ausgebildet ist.

3. Kreis nach Anspruch 2, dadurch gekennzeichnet, daß das elastische Mittel (20) in der ringförmigen Kammer angeordnet ist.

4. Kreis nach Anspruch 1 oder 2, dadurch gekennzeichnet, daß das elastische Mittel (20) in der ersten Kammer (14) angeordnet ist.
